# EUROPÄISCHE PATENTSCHRIFT

(11) **EP 2 923 092 B1**
(45) Veröffentlichungstag und Bekanntmachung des Hinweises auf die Patenterteilung: **28.09.2016**
(21) Anmeldenummer: 13792259.7
(22) Anmeldetag: 13.11.2013
(51) Int. Cl.: F16B 13/12

(54) **SPREIZDÜBEL**
EXPANSION ANCHOR
CHEVILLE A EXPANSION

(30) Priorität: 21.11.2012 DE 102012111227
(43) Veröffentlichungstag der Anmeldung: 30.09.2015
(73) Patentinhaber: fischerwerke GmbH & Co. KG, 72178 Waldachtal (DE)
(72) Erfinder: DALY, Aaron, 72285 Pfalzgrafenweiler (DE)
(74) Vertreter: Suchy, Ulrich Johannes
(86) Internationale Anmeldenummer: PCT/EP2013/003418
(87) Internationale Veröffentlichungsnummer: WO 2014/079546

(56) Entgegenhaltungen:
- EP-A2- 0 964 169
- DE-C1- 3 208 347

## Beschreibung

Die Erfindung betrifft einen Spreizdübel mit den Merkmalen des Oberbegriffs des Anspruchs 1.

Spreizdübel, insbesondere aus Kunststoff, sind bekannt. Sie sind überwiegend hülsenförmig, so dass sie einen sich in einer Dübellängsrichtung erstreckenden Hohlraum aufweisen, der einen Spreizkanal bildet, in den ein stiftförmiges Spreizmittel zum Aufspreizen des Dübels zur Verankerung in einem Bohrloch einbringbar ist. Das stiftförmige Spreizmittel ist beispielsweise ein Nagel oder eine Nagelschraube, der oder die in den Spreizdübel eingeschlagen wird und ihn aufspreizt, oder eine Schraube, die in den Spreizdübel eingeschraubt wird und ihn aufspreizt. Ausgestaltungen solcher Spreizdübel, insbesondere in einem Spreizbereich, sind vielfältig. Der Spreizbereich ist ein Längsabschnitt des Spreizdübels, der durch das Einbringen des Spreizmittels aufgespreizt wird.

Die europäische Patentanmeldung EP 0 964 169 A2 offenbart einen Spreizdübel mit zwei gegenüberliegend angeordneten und sich in einer Dübellängsrichtung erstreckenden Stegen, von denen an beiden Längsseiten Spreizelemente in einer Umfangsrichtung des Spreizdübels abstehen. In Seitenansicht des Spreizdübels sind die Spreizelemente dreiecksförmig, wobei eine Seite der Spreizelemente in einer Radialebene des Spreizdübels und eine andere Seite der Spreizelemente schräg zum Spreizdübel verläuft. Die Spreizelemente erstrecken sich von den beiden Stegen in entgegengesetzten Umfangsrichtungen, sie ragen passgenau ohne Zwischenraum ineinander. Beim Eindrehen einer Spreizschraube in den Spreizdübel schwenken die Spreizelemente des bekannten Spreizdübels um Schwenkachsen nach außen, die sich entlang der Längsseiten der Stege in der Dübellängsrichtung, d.h. achsparallel zum Spreizdübel, erstrecken. Die Schwenkbarkeit der Spreizelemente ist durch eine Verformbarkeit des aus Kunststoff bestehenden Spreizdübels gegeben.

Die Patentschrift DE 32 08 347 C1 offenbart einen ebenfalls aus Kunststoff hergestellten, hülsenförmigen Spreizdübel mit zwei Stegen, die einander gegenüberliegend angeordnet sind und sich in einer Dübellängsrichtung erstrecken. Die Stege weisen eine Tannenbaumprofilierung auf, d. h. sie weisen axial hintereinander angeordnete Kegelstümpfe auf, die sich am durchmessergrößeren, hinteren Ende mit einem kurzen zylindrischen Abschnitt fortsetzen. In Seitenansicht des Spreizdübels ergibt die Profilierung ein Sägezahnprofil, dessen Zähne einer Ausziehrichtung des Spreizdübels aus einem Loch in einem Ankergrund entgegengerichtet sind. Durch die Tannenbaumprofilierung sind Zähne an den Stegen ausgebildet, die sich in Umfangsrichtung über weniger als 180° erstrecken, so dass in der Dübellängsrichtung verlaufende Spalte zwischen den Zähnen bestehen. In Umfangsrichtung stehen die Zähne jeweils in einer Richtung über die Stege über. Zwischen den Stegen besteht ein in Umfangsrichtung verlaufender Spalt zwischen den Zähnen des bekannten Spreizdübels. An den in Umfangsrichtung über die Stege überstehenden Stellen sind die Zähne jeweils paarweise durch in der Dübellängsrichtung verlaufende Längsstege verbunden, die einen kleinen Querschnitt aufweisen, so dass sie verformbar sind und abreißen können. Wie gesagt, sind die Zähne paarweise durch die Längsstege verbunden, die allgemein auch als Verbinder bezeichnet werden können, nach jedem zweiten Zahn besteht keine Verbindung der in Umfangsrichtung von den Stegen des Spreizdübels überstehenden Zähne außerhalb der Stege. Die Längsverbinder übertragen Zug- und Druckkräfte und erhöhen dadurch eine Biege-, Knick- und Torsionsfestigkeit des bekannten Spreizdübels.

Bei Spreizdübeln aus Kunststoff besteht das Problem, dass der Spreizstift beim Einbringen in den Spreizdübel aufgrund der beim Aufspreizen auftretenden Belastungen und Verformungen des Spreizdübels seitlich zwischen zwei Spreizelementen austreten kann. Der Spreizdübel wird von der Austrittsstelle nach vorn nicht mehr wie vorgesehen aufgespreizt. "Vorn" und "hinten" bezieht sich auf eine Einbringrichtung des Spreizdübels, ein vorderes Ende des Spreizdübels ist einem Lochgrund eines Lochs, in dem der Spreizdübel verankert ist bzw. wird, zugewandt, ein hinteres Ende des Spreizdübels ist zugänglich, wenn der Spreizdübel in das Loch eingebracht ist, und der Spreizstift wird durch das hintere Ende in den Spreizdübel eingebracht.

Aufgabe der Erfindung ist, einen Spreizdübel der vorstehend erläuterten Art dahingehend zu verbessern, dass das Risiko verringert ist, dass ein Spreizstift beim Einbringen in den Spreizdübel seitlich austritt.

Diese Aufgabe wird erfindungsgemäß durch die Merkmale des Anspruchs 1 gelöst.

Der erfindungsgemäße Spreizdübel mit den Merkmalen des Anspruchs 1 weist mindestens zwei in einer Dübellängsrichtung verlaufende Stege auf, wobei unter "in Dübellängsrichtung" nicht nur ein gerader, achsparalleler Verlauf zu verstehen ist, sondern beispielsweise auch wendel- oder wellenförmige Stege.

Von den Stegen stehen Spreizelemente in entgegengesetzten Umfangsrichtungen des Spreizdübels ab, wobei Spreizelemente, die von verschiedenen Stegen abstehen, zwischen einander greifen bzw. einander in der Dübellängsrichtung abwechseln. Die Stege und die Spreizelemente umschließen einen Hohlraum, der sich in der Dübellängsrichtung erstreckt und einen Spreizkanal bildet, in den ein Spreizstift zum Aufspreizen des Spreizdübels einbringbar ist. Der Spreizstift ist beispielsweise ein Nagel, eine Nagelschraube oder eine Schraube. Er kann auch als Befestigungsmittel bezeichnet werden, weil ein zu befestigender Gegenstand an ihm bzw. mit ihm befestigt wird.

Der Spreizstift drückt die Stege und die Spreizelemente des Spreizdübels nach außen, d. h. er spreizt den Spreizdübel auf. Die Spreizelemente schwenken beim Aufspreizen um Achsen, die zumindest im Wesentlichen in der Dübellängsrichtung oder schräg in einem Winkel zur Dübellängsrichtung verlaufen, nach außen. Eine Schwenkbeweglichkeit wird durch eine elastische und/oder plastische Verformbarkeit des Materials, aus dem der Spreizdübel besteht, erreicht. Außerdem sind die Spreizelemente mit dehnbaren und abreißbaren Verbindern verbunden, die schräg zur Dübellängsrichtung verlaufen. Die Verbinder wirken einem seitlichen Austritt des Spreizstifts zwischen zwei Spreizelementen hindurch aus dem Spreizdübel entgegen. Insbesondere wenn die Spreizelemente Abstand voneinander aufweisen, verbessern die Verbinder eine Führung des Spreizstifts beim Einbringen in den Spreizdübel im Spreizdübel, wodurch das Risiko, dass der Spreizstift seitlich austritt, gemindert ist. Der Spreizdübel spreizt dadurch über die gesamte Länge seines Spreizbereichs wie vorgesehen auf, was seine Verankerung in einem Loch in einem Ankergrund verbessert. Die Verbinder wirken dem Aufspreizen nicht oder nur schwach entgegen, so dass eine Spreizkraft nicht oder nur wenig erhöht ist. Insbesondere weisen die Verbinder einen bandförmigen Querschnitt auf, d.h. ihre Ausdehnung ist in Umfangs- und/oder Längsrichtung größer als in radialer Richtung, wobei die Verbinder im Vergleich zu den Spreizelementen einen insbesondere in radialer Richtung verkleinerten Querschnitt aufweisen. Zugleich erhöhen die Verbinder eine Steifigkeit des Spreizdübels gegen Biegen, Knicken und Torsion. Die schräge Ausrichtung der Verbinder dient insbesondere der Erhöhung der Torsionssteifigkeit, weil die Verbinder abhängig von ihrer Ausrichtung bei einer Tordierung des Spreizdübels auf Zug oder auf Druck beansprucht werden und nicht oder weniger auf Biegung, wie es bei einem in der Dübellängsrichtung verlaufenden Verbinder der Fall wäre.

Eine Ausgestaltung der Erfindung sieht dehnbare und abreißbare Verbinder vor, die die Spreizelemente paarweise verbinden. Das bedeutet, dass bei in Längsrichtung hintereinander angeordneten Spreizelementen nach jedem zweiten Spreizelement keine Verbindung vorhanden ist. Diese Ausgestaltung der Erfindung erleichtert das Aufspreizen, wobei die Axialführung des Spreizstifts im Spreizdübel nur wenig verschlechtert und damit die Gefahr eines seitlichen Austritts des Spreizstifts beim Einbringen in den Spreizdübel nur wenig erhöht und im Vergleich mit einem Spreizdübel ohne Verbinder zwischen den Spreizelementen immer noch verringert ist.

Eine Ausgestaltung der Erfindung sieht vor, dass die Verbinder nur in einem vorderen Bereich des Spreizdübels vorhanden sind. In einem hinteren Teil des Spreizbereichs des Spreizdübels sind keine Verbinder zwischen den Spreizelementen vorhanden. Der vordere Teil ist beispielsweise eine vordere Hälfte des Spreizbereichs des Spreizdübels oder beispielsweise die ersten zwei bis vier oder fünf Spreizelemente bzw. die ersten ein bis zwei Paare Spreizelemente. Die Gefahr, dass ein Spreizstift beim Einbringen in den Spreizdübel seitlich austritt, besteht im Wesentlichen in einem vorderen Bereich des Spreizdübels, weil der Spreizdübel in einem hinteren Teil des Spreizbereichs einen üblicherweise vorhandenen zylindrischen Hohlschaft aufweist, der in Umfangsrichtung geschlossen ist und den Spreizstift axial führt. Spreizelemente in einem hinteren Teil des Spreizbereichs des Spreizdübels, die keine Verbinder aufweisen, zwischen die der Spreizstift beim Einbringen in den Spreizdübel aber zuerst eintritt, lassen sich aufspreizen, ohne dass eine Spreizkraft durch die Verbinder erhöht ist. Erreicht der Spreizstift den vorderen Teil des Spreizdübels, wird er von den Verbindern im Spreizdübel geführt.

Eine Ausgestaltung der Erfindung sieht je zwei dehnbare und abreißbare Verbinder zwischen zwei Spreizelementen vor, die entgegengesetzt schräg zur Dübellängsrichtung verlaufen, wobei ein Winkel, unter dem die Verbinder schräg zur Dübellängsrichtung verlaufen, gleich oder verschieden sein kann. Die Verbinder verlaufen also beispielsweise V- oder X-förmig zwischen zwei Spreizelementen. Diese Ausgestaltung der Erfindung hat den Vorteil einer erhöhten Torsionssteifigkeit und erhöht die Sicherheit des Spreizdübels gegen Ausknicken seiner Stege.

Eine Ausgestaltung der Erfindung sieht hakenförmige Spreizelemente vor, die mit Abstand zwischen einander greifen. Die Hakenform kann so ausgebildet und angeordnet sein, dass die Spreizelemente einander hintergreifen und bei einer Verformung des Spreizdübels, beispielsweise einer Biegung oder Torsion, in Anlage aneinander gelangen und eine Biege-, Knick- und/oder Torsionssteifigkeit des Spreizdübels erhöhen.

Die Erfindung wird nachfolgend anhand eines in der Zeichnung dargestellten Ausführungsbeispiels näher erläutert. Es zeigen:
- Figur 1: einen erfindungsgemäßen Spreizdübel in perspektivischer Darstellung; und
- Figur 2: den Spreizdübel aus Figur 1 in aufgespreiztem Zustand.

Der in der Zeichnung dargestellte, erfindungsgemäße Spreizdübel 1 ist beispielsweise durch Spritzgießen aus Kunststoff hergestellt. Er ist hülsenförmig und weist einen rohrförmigen, in Umfangsrichtung geschlossenen Hohlschaft 2 in einem hinteren Bereich auf, der mit einem hohlkonischen Flansch 3 an einem hinteren Ende des Spreizdübels 1 endet. In Einbringrichtung vorn schließt sich ein Spreizbereich 4 an den Hohlschaft 2 an, wobei die Einbringrichtung die Richtung ist, in der der Spreizdübel 1 bestimmungsgemäß in ein Bohrloch eingebracht wird. Über den Spreizbereich 4 erstrecken sich zwei Stege 5 in einer Dübellängsrichtung bis zu einem vorderen Ende des Spreizdübels 1, wo sie ebenso wie hinten im Spreizbereich 4 am Übergang zum Hohlschaft 2 einstückig miteinander verbunden sind. Die Stege 5 sind einander gegenüberliegend an einem Umfang des Spreizdübels 1 angeordnet.

Von Längsseiten der Stege 5 stehen Spreizelemente 6 in entgegengesetzten Umfangsrichtungen des Spreizdübels 1 ab. Die Spreizelemente 6 stehen jeweils abwechselnd vom einen und vom anderen Steg 5 ab, so dass sie ähnlich einer Verzahnung oder Krampen eines Reißverschluss, allerdings mit Abstand voneinander zwischen einander greifen. Die Spreizelemente 6 sind hakenförmig, sie stehen schräg nach hinten von den Stegen 5 ab und weisen nach einer Abwinklung in einer Mittelebene des Spreizdübels 1 zwischen den Stegen 5 schräg nach vorn. Alternativ können die Spreizelemente 6 auch umgekehrt schräg nach vorn von den Stegen 5 abstehen und nach der Abwinklung schräg nach hinten weisen (nicht dargestellt). Die Spreizelemente 6 berühren einander nicht, sondern es bestehen wie gesagt Abstände zwischen ihnen, wenn der Spreizdübel 1 unverformt ist. Durch ihre Hakenform hintergreifen die zwischen einander greifenden Spreizelemente 6 einander und verbinden die Stege 5 - wegen der Abstände zwischen den Spreizelementen 6 - mit Spiel durch Formschluss miteinander.

Die hakenförmigen Spreizelemente 6 gelangen aneinander, d. h. ein Formschluss zwischen den Spreizelementen 6 wird wirksam, wenn der Spreizdübel 5 gebogen wird oder die Stege 5 sich voneinander entfernen. Auf diese Weise erhöhen die Spreizelemente 6 eine Biege- und Knicksteifigkeit des Spreizdübels 1 und verhindern ein Ausknicken der Stege 5 beim Einbringen des Spreizdübels 5 in ein nicht dargestelltes Loch in einem Verankerungsgrund. Außerdem erhöhen die Spreizelemente 6 eine Torsionssteifigkeit des Spreizdübels 1 im Spreizbereich 4, wenn die Spreizelemente 6 bei einer Tordierung des Spreizdübels 1, d. h. einer wendelförmigen Verformung der Stege 5, in Anlage aneinander gelangen.

Die vorderen beiden Paare Spreizelemente 6, d. h. das erste und das zweite Spreizelement 6, sowie das dritte und das vierte Spreizelement 6 sind durch Verbinder 7, 8 miteinander verbunden. Die bandförmigen Verbinder 7, 8 sind Stege mit im Vergleich zu den Spreizelementen 6 verkleinerten Querschnitten, sie sind verformbar und abreißbar. Sie verlaufen schräg zu einer Dübellängsrichtung von einem Spreizelement 6 zu Ecken eines anderen der hakenförmigen Spreizelemente 6. Zwischen den beiden Paaren Spreizelemente 6 und zwischen den Spreizelementen 6 weiter hinten im Spreizbereich 4 des Spreizdübels 1 sind die Spreizelemente 6 nicht miteinander verbunden, sondern weisen die erläuterten Abstände voneinander auf.

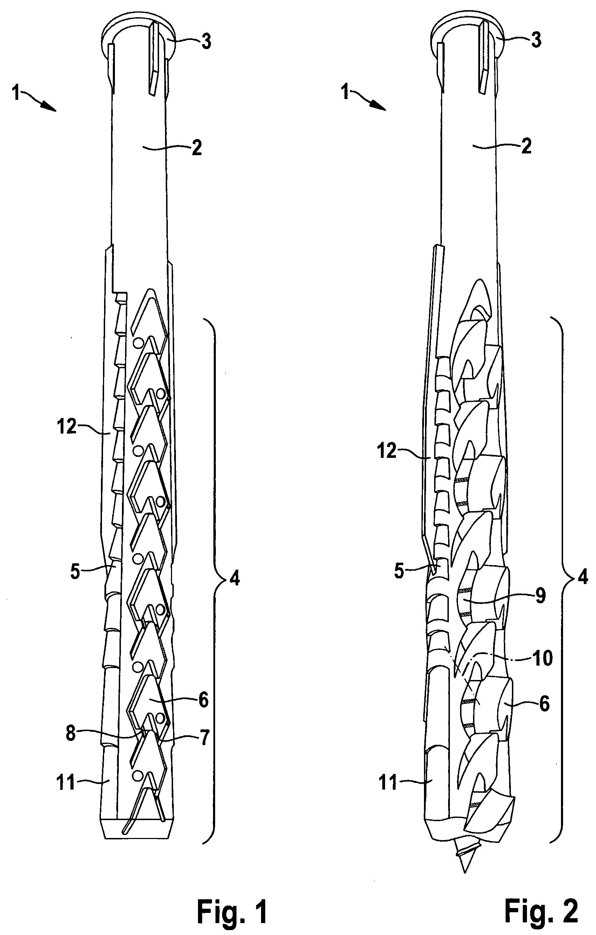

Die Stege 5 und die Spreizelemente 6 umschließen hülsenförmig einen Spreizkanal in koaxialer Verlängerung des Hohlschafts 2, in den eine Spreizschraube 9 als Spreizstift einbring-, d. h. einschraubbar ist. Eine lichte Weite zwischen den Stegen 5 und Spreizelementen 6 im Spreizbereich 4 des Spreizdübels 1 ist kleiner als ein Innendurchmesser des Hohlschafts 2, so dass die Spreizschraube 9 die Stege 5 und die Spreizelemente 6 auseinander und nach außen drückt, d. h. den Spreizdübel 1 im Spreizbereich 4 aufspreizt, wie es in Figur 2 zu sehen ist. Beim Aufspreizen schwenken, sofern eine den Spreizdübel 1 umgebende Lochwandung nachgibt, die Spreizelemente 6 um Schwenkachsen 10 nach außen, von denen beispielhaft eine in Figur 2 gezeichnet ist. Die Schwenkachsen 10 verlaufen schräg zur Dübellängsrichtung. Die Schwenkbarkeit der Spreizelemente 6 ist durch deren Verformbarkeit gegeben. In einem weichen Baustoff wie beispielsweise Porenbeton formen sich die Spreizelemente 6 in die Lochwandung ein und verkrallen den Spreizdübel in einem Loch in einem Ankergrund.

Die Verbinder 7, 8 zwischen den Spreizelementen 6 im vorderen Teil des Spreizbereichs 4 führen die den Spreizstift bildende Spreizschraube 9 im Spreizkanal zwischen den Spreizelementen 6 und den Stegen 5. Die Verbinder 7, 8 verhindern einen seitlichen Austritt der Spreizschraube 9 aus dem Spreizdübel 1 zwischen den Spreizelementen 6 hindurch. Weil die Spreizschraube 9 hinten im Hohlschaft 2 des Spreizdübels 1 axial geführt ist, ist das Risiko, dass sie bereits im hinteren Teil des Spreizbereichs 4 seitlich austritt, gering, weswegen Verbinder 7, 8 dort entbehrlich sind. Allerdings schließt die Erfindung Verbinder 7, 8 im hinteren Teil des Spreizbereichs 4 nicht grundsätzlich aus. Weil die Spreizelemente 6 im hinteren Teil des Spreizbereichs 4 nicht miteinander verbunden sind, lassen sie sich leichter aufspreizen, d. h. ein Eindrehmoment der Spreizschraube 9 ist verringert. Gelangt die Spreizschraube 9 in den vorderen Teil des Spreizbereichs 4, ist der Spreizdübel 1 durch die hinten bereits aufgespreizten Spreizelemente 6 im Loch gehalten, so dass er nicht mit der Spreizschraube 9 mitdreht.

Durch ihren schrägen Verlauf verbessern die Verbinder 7, 8 zwischen den beiden vorderen Paaren Spreizelemente 6 im Vergleich zu in Längsrichtung verlaufenden Verbindern nicht nur die Führung der Spreizschraube 9 im Spreizdübel 1, sondern sie vergrößern auch eine Torsionssteifigkeit.

An ihren Außenseiten weisen die Stege 5 eine tannenbaumartige Profilierung 11 auf, um die Verankerung des Spreizdübels 1 in einem Loch in einem Ankergrund zu verbessern. Im hinteren Teil des Spreizbereichs 4 stehen von den Stegen 5 zwei Längsrippen 12 nach außen ab, die in einer Axialebene des Spreizdübels 1 angeordnet sind.

### Bezugszeichenliste

### Spreizdübel

- 1: Spreizdübel
- 2: Hohlschaft
- 3: Flansch
- 4: Spreizbereich
- 5: Steg
- 6: Spreizelement
- 7: Verbinder
- 8: Verbinder
- 9: Spreizschraube
- 10: Achse
- 11: Tannenbaumprofilierung
- 12: Längsrippe

## Patentansprüche

1. Spreizdübel mit mindestens zwei in einer Dübellängsrichtung verlaufenden Stegen (5) und mit Spreizelementen (6), die von den Stegen (5) in entgegengesetzten Umfangsrichtungen abstehen, wobei die Stege (5) und die Spreizelemente (6) einen Hohlraum umschließen, der sich in der Dübellängsrichtung erstreckt und einen Spreizkanal bildet, in den ein Spreizstift zum Aufspreizen des Spreizdübels (1) einbringbar ist, **dadurch gekennzeichnet, dass** die Spreizelemente (6) beim Aufspreizen um in der Dübellängsrichtung oder schräg verlaufende Achsen (10) nach außen schwenken und dass Spreizelemente (6) mit dehnbaren und abreißbaren Verbindern (7, 8) verbunden sind, die schräg zur Dübellängsrichtung verlaufen.

2. Spreizdübel nach Anspruch 1, **dadurch gekennzeichnet, dass** Spreizelemente (6) paarweise mit dehnbaren und abreißbaren Verbindern (7, 8) verbunden sind.

3. Spreizdübel nach Anspruch 1 oder 2, **dadurch gekennzeichnet, dass** nur Spreizelemente (6) in einem vorderen Teil des Spreizdübels (1) mit den Verbindern (7, 8) verbunden sind.

4. Spreizdübel nach einem der Ansprüche 1 - 3, **dadurch gekennzeichnet, dass** die Spreizelemente (6) paarweise mit je zwei dehnbaren und abreißbaren Verbindern (7, 8) verbunden sind, die entgegengesetzt schräg zur Dübellängsrichtung verlaufen.

5. Spreizdübel nach Anspruch 1, **dadurch gekennzeichnet, dass** die Spreizelemente (6) hakenförmig sind und mit Abstand zwischen einander greifen.

## Claims

1. Expansible fixing plug having at least two limbs (5) extending in a longitudinal direction of the fixing plug and having expansion elements (6) which project from the limbs (5) in opposite circumferential directions, the limbs (5) and the expansion elements (6) surrounding a hollow space which extends in the longitudinal direction of the fixing plug and which forms an expansion channel into which an expander rod can be introduced for expansion of the expansible fixing plug (1), **characterised in that** the expansion elements (6), on expansion, pivot outwards around axes (10) extending in the longitudinal direction of the fixing plug or on a slant; and **in that** expansion elements (6) are connected by extensible and tearable connectors (7, 8) which extend on a slant to the longitudinal direction of the fixing plug.

2. Expansible fixing plug according to claim 1, **characterised in that** expansion elements (6) are connected in pairs by extensible and tearable connectors (7, 8).

3. Expansible fixing plug according to claim 1 or 2, **characterised in that** only expansion elements (6) in a front portion of the expansible fixing plug (1) are connected by the connectors (7, 8).

4. Expansible fixing plug according to one of claims 1 - 3, **characterised in that** the expansion elements (6) are connected in pairs by, in each case, two extensible and tearable connectors (7, 8), which extend on opposite slants to the longitudinal direction of the fixing plug.

5. Expansible fixing plug according to claim 1, **characterised in that** the expansion elements (6) are hook-shaped and extend between one another with a spacing.

## Revendications

1. Cheville à expansion, avec au moins deux branches (5) s'étendant dans une direction longitudinale de la cheville et avec des éléments d'expansion (6) qui partent en saillie des branches (5) dans des directions périphériques opposées, sachant que les branches (5) et les éléments d'expansion (6) enferment un espace creux, qui s'étend dans la direction longitudinale de la cheville et forme un canal d'expansion dans lequel peut être introduite une tige d'expansion pour l'expansion de la cheville à expansion (1), **caractérisée en ce que** les éléments d'expansion (6), lors de l'expansion, pivotent vers l'extérieur autour d'axes (10) s'étendant dans la direction longitudinale de la cheville ou en oblique, et **en ce que** des éléments d'expansion (6) sont reliés à des connecteurs (7, 8) extensibles et pouvant être arrachés, qui s'étendent en oblique par rapport à la direction longitudinale de la cheville.

2. Cheville à expansion selon la revendication 1, **caractérisée en ce que** des éléments d'expansion (6) sont reliés par paires à des connecteurs (7, 8) extensibles et pouvant être arrachés.

3. Cheville à expansion selon la revendication 1 ou 2, **caractérisée en ce que** seuls les éléments d'expansion (6) dans une partie avant de la cheville à expansion (1) sont reliés aux connecteurs (7, 8).

4. Cheville à expansion selon l'une des revendications 1 à 3, **caractérisée en ce que** les éléments d'expansion (6) sont, par paires, reliés chaque fois à deux connecteurs (7, 8) extensibles et pouvant être arrachés, qui s'étendent en sens opposés en oblique par rapport à la direction longitudinale de la cheville.

5. Cheville à expansion selon la revendication 1, **caractérisée en ce que** les éléments d'expansion (6) sont en forme de crochets et s'engagent à distance entre eux.
